(19) Europäisches Patentamt / European Patent Office / Office européen des brevets

(11) EP 4 491 657 A1

(12) **EUROPEAN PATENT APPLICATION**
published in accordance with Art. 153(4) EPC

(43) Date of publication:
**15.01.2025 Bulletin 2025/03**

(21) Application number: **23766585.6**

(22) Date of filing: **24.02.2023**

(51) International Patent Classification (IPC):
*C08G 65/34* (2006.01) *C08J 5/04* (2006.01)
*C08K 3/00* (2018.01) *C08L 71/12* (2006.01)

(52) Cooperative Patent Classification (CPC):
**C08G 65/34; C08J 5/04; C08K 3/00; C08L 71/12**

(86) International application number:
**PCT/JP2023/006679**

(87) International publication number:
**WO 2023/171407 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.03.2022 JP 2022035916**

(71) Applicant: **Idemitsu Kosan Co.,Ltd.**
**Tokyo 100-8321 (JP)**

(72) Inventors:
- **SUGA, Koichi**
  **Tokyo 100-8321 (JP)**
- **SENGA, Minoru**
  **Tokyo 100-8321 (JP)**
- **WATANABE, Hajime**
  **Tokyo 100-8321 (JP)**
- **HOSHI, Yuko**
  **Tokyo 100-8321 (JP)**
- **KUMAGAI, Hiromu**
  **Tokyo 100-8321 (JP)**

(74) Representative: **Hoffmann Eitle**
**Patent- und Rechtsanwälte PartmbB**
**Arabellastraße 30**
**81925 München (DE)**

(54) **AROMATIC POLYETHER, METHOD FOR PRODUCING AROMATIC POLYETHER, COMPOSITION, AND SHEET**

(57) An aromatic polyether containing a structural unit represented by the following formula (1), a structural unit represented by the following formula (2), and a structure represented by the following formula (3),
wherein $^1$H-NMR measurement, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm is 0.20 to 2.00%.

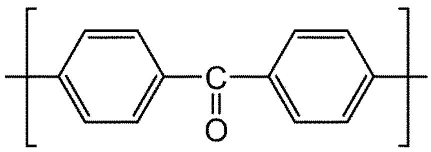

(1)

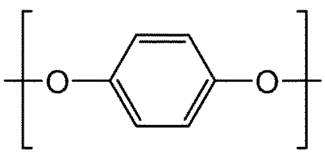

(2)



Processed by Luminess, 75001 PARIS (FR)

(Cont. next page)

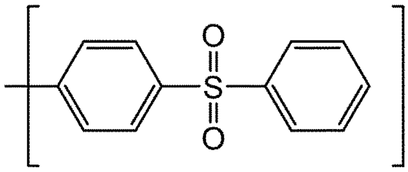

(3)

## Description

Technical Field

The present disclosure relates to an aromatic polyether, a method for producing an aromatic polyether, a composition and a sheet.

Specifically, the present disclosure relates to an aromatic polyether having a lowered melting point and excellent processability, a method for producing an aromatic polyether, a composition and a sheet.

Background Art

As a typical resins of engineering plastic, aromatic polyethers such as polyetheretherketone (hereinafter, polyetheretherketone may be referred to as "PEEK") are known.

Concerning PEEK as a 3D printed material, Patent Document 1 discloses capping the end of a PEEK with 4-fluorodiphenylsulfone.

Related Art Documents

Patent Documents

[Patent Document 1] Chinese Patent Application Publication No. 113736044

Summary of the Invention

In general, aromatic polyethers such as PEEK have heat resistance, slidability, chemical resistance, and good mechanical properties. Due to their particularly remarkable heat resistance, they can be used in place of metals even in harsh environments. Conversely, due to the remarkable heat resistance of aromatic polyethers, high melt temperature is required at the time of forming, so that such high melt temperature is disadvantageous for use in applications that do not require significant heat resistance.

From the viewpoint of solving such a problem, there is room for further improvement in the conventional techniques including Patent Document 1.

One of the objects of the present disclosure is to provide an aromatic polyether having a lowered melting point and excellent processability, method for producing such an aromatic polyether, a composition and a sheet.

As a result of intensive studies, the present inventors have found that an aromatic polyether having a particular structural configuration has a lowered melting point and excellent processability, and have completed the present disclosure.

According to the present disclosure, the following aromatic polyether and so forth can be provided.

1. An aromatic polyether comprising a structural unit represented by the following formula (1), a structural unit represented by the following formula (2), and a structure represented by the following formula (3),
wherein in $^{1}$H-NMR measurement, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm is 0.20 to 2.00%.

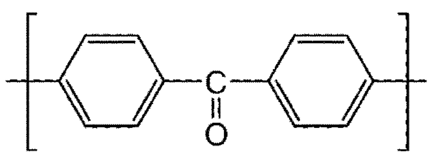

(1)

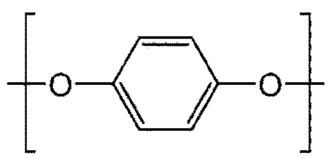

(2)

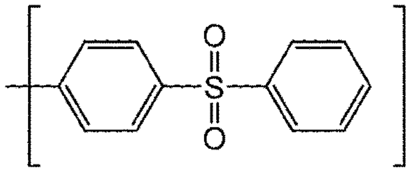

(3)

2. The aromatic polyether according to 1, comprising a structural unit represented by the following formula (4).

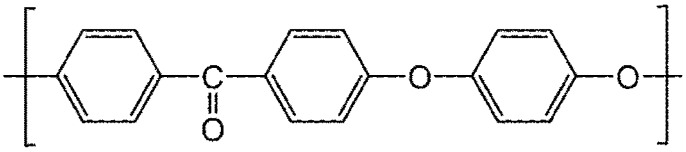

(4)

3. The aromatic polyether according to 1 or 2, wherein the ratio of the peak intensities is 0.20 to 1.80%.
4. The aromatic polyether according to any one of 1 to 3, having a melt flow index of 1.0 to 100 g/10 min.
5. A method for producing an aromatic polyether comprising:

reacting 4,4'-dihalogenobenzophenone, hydroquinone, and diphenylsulfone having one reactive group, wherein the aromatic polyether comprises a structural unit represented by the following formula (1), a structural unit represented by the following formula (2), and a structure represented by the following formula (3), and has in $^1$H-NMR measurement, a ratio of the peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm of 0.20 to 2.00%.

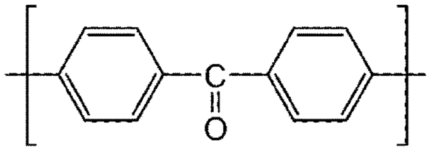

(1)

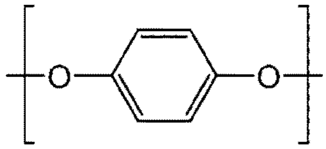

(2)

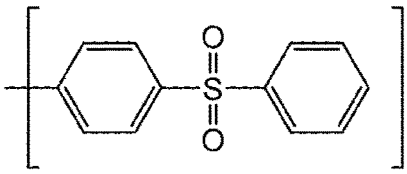

(3)

6. The method for producing an aromatic polyether according to 5, wherein a molar ratio of 4,4'-dihalogenobenzophenone (DHBP) to hydroquinone (HQ) used in the reaction, ([DHBP]:[HQ]), is 0.97 to 1.06:1.
7. The method for producing an aromatic polyether according to 5 or 6, wherein a molar ratio of 4,4'-dihalogenobenzophenone (DHBP) to hydroquinone (HQ) used in the reaction, ([DHBP]:[HQ]), is 0.97 to 1.00:1.
8. The method for producing an aromatic polyether according to any one of 5 to 7, wherein a molar ratio of diphenylsulfone (DPS) having one reactive group to hydroquinone (HQ) used in the reaction, ([DPS]:[HQ]), is 0.002 to 0.080:1.
9. The method for producing an aromatic polyether according to any one of 5 to 8, wherein 4,4'-dihalogenobenzophenone comprises 4,4'-dichlorobenzophenone.
10. The method for producing an aromatic polyether according to any one of 5 to 9, wherein 4,4'-dihalogenobenzophenone comprises 4,4'-difluorobenzophenone.

11. The method for producing an aromatic polyether according to any one of 5 to 10, wherein diphenylsulfone having one reactive group comprises 4-chlorodiphenylsulfone.

12. The method for producing an aromatic polyether according to any one of 5 to 11, wherein diphenylsulfone having one reactive group comprises 4-fluorodiphenylsulfone.

13. The method for producing an aromatic polyether according to any one of 5 to 12, wherein the aromatic polyether has a melt flow index of 1.0 to 100 g/10 min.

14. A composition comprising:

the aromatic polyether according to any one of 1 to 4, and
an inorganic compound.

15. A composition comprising an aromatic polyether comprising a structural unit represented by the following formula (1), a structural unit represented by the following formula (2), and a structure represented by the following formula (3), wherein $^1$H-NMR measurement of the composition, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm in is 0.20 to 2.00%.

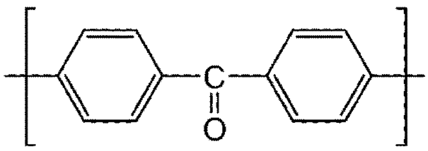

(1)

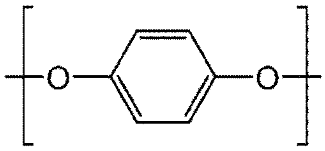

(2)

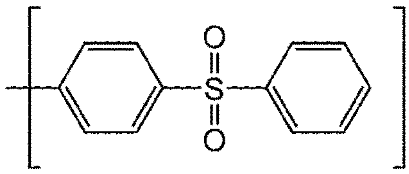

(3)

16. The composition according to 15, wherein the aromatic polyether comprises a structural unit represented by the following formula (4).

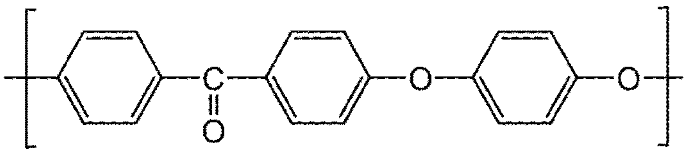

(4)

17. The composition according to 15 or 16, wherein the ratio of the peak intensities is 0.20 to 1.80%.

18. The composition according to any one of 15 to 17, wherein the aromatic polyether has a melt flow index of 1.0 to 100 g/10 min.

19. The composition according to any one of 15 to 18, comprising an inorganic compound.

20. The composition according to 14 or 19, wherein the inorganic compound is one or more selected from the group consisting of glass fibers, carbon fibers, and boron nitride.

21. The composition according to any one of 14, 19 and 20, wherein the inorganic compound is one or more selected from the group consisting of glass fibers and carbon fibers, in one or more forms selected from the group consisting of chopped strand, roving, woven fabric, nonwoven fabric and unidirectional material.

22. The composition according to any one of 14, 19, 20 and 21, wherein the inorganic compound is glass fibers.
23. A sheet comprising a cloth comprising an inorganic compound, and the aromatic polyether according to any one of claims 1 to 4 being impregnated in the cloth.
24. A sheet comprising a cloth comprising an inorganic compound, and a composition being impregnated in the cloth,

wherein the composition comprises an aromatic polyether comprising a structural unit represented by the following formula (1), a structural unit represented by the following formula (2), and a structure represented by the following formula (3), and
wherein $^{1}$H-NMR measurement of the composition, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm in is 0.20 to 2.00%.

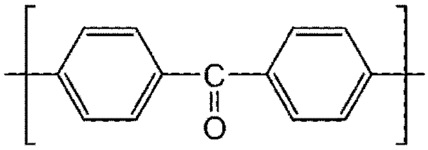
(1)

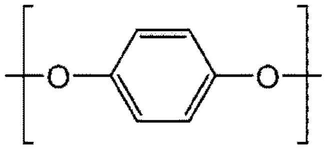
(2)

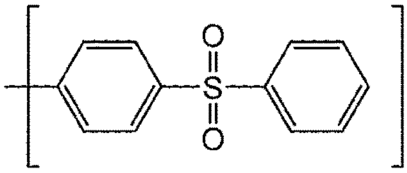
(3)

25. The sheet according to 24, wherein the aromatic polyether comprises a structural unit represented by the following formula (4).

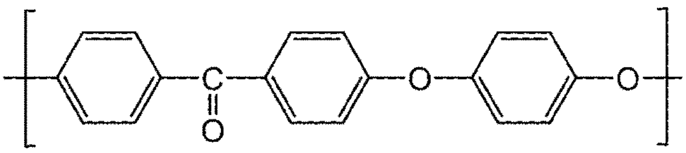
(4)

26. The sheet according to 24 or 25, wherein the ratio of the peak intensities is 0.20 to 1.80%.
27. The sheet according to any one of 24 to 26, wherein the aromatic polyether has a melt flow index of 1.0 to 100 g/10 min.
28. The sheet according to any one of 23 to 27, wherein the cloth is a unidirectional material.
29. The sheet according to any one of 23 to 28, wherein the cloth comprises one or more selected from the group consisting of glass fibers and carbon fibers.

According to the present disclosure, an aromatic polyether having lowered melting point and excellent processability, a method for producing such an aromatic polyether, a composition, and a sheet can be provided.

Mode for Carrying out the Invention

Now, the aromatic polyether, the method for producing a aromatic polyether, the composition, and the sheet according to the present disclosure are described in detail below.
The expression ""x to y"" as used herein represents the numerical range of "from "x" or more to "y" or less." An

upper limit value and a lower limit value described for the numerical range may be arbitrarily combined.

In addition, two or more embodiments that are not contrary to each other out of the individual embodiments of an aspect according to the present disclosure to be described below may be combined, and an embodiment in which the two or more embodiments are combined is also an embodiment of the aspect according to the present disclosure.

1. Aromatic polyether

An aromatic polyether according to one aspect of the present disclosure contains a structural unit represented by the following formula (1), a structural unit represented by the following formula (2), and a structure represented by the following formula (3), wherein in $^1$H-NMR measurement, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity chemical shift 7.35 ppm (hereinafter, simply referred to as "intensity ratio X") is 0.20 to 2.00%.

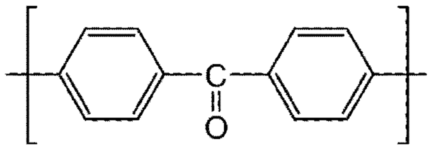

(1)

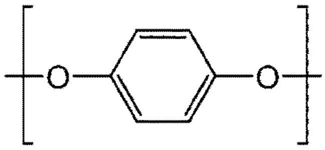

(2)

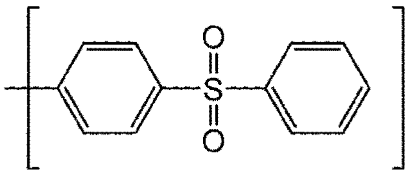

(3)

According to the present aspect, the aromatic polyether having a lowered melting point and an effect of excellent in processability can be obtained.

In other words, in general, aromatic polyethers such as PEEK have heat resistance, slidability, chemical resistance, and good mechanical properties. Due to their particularly remarkable heat resistance, they can be used in place of metals even in harsh environments. Conversely, due to the remarkable heat resistance of aromatic polyethers, high melt temperature is required at the time of forming, so that such high melt temperature is disadvantageous for use in applications that do not require significant heat resistance. In contrast thereto, the aromatic polyether according to the present aspect has a lowered melting point, so that the melt temperature at the time of forming can be set low, and excellent processability can be exhibited.

Further, the aromatic polyether according to the present aspect can exhibit more excellent mechanical strength by blending an inorganic compound thereto.

The reason why such an effect is exerted is not necessarily clear, but it is presumed that the interface between the aromatic polyether and the inorganic compound becomes suitable condition for exhibiting excellent mechanical strength due to the aromatic polyether having the structure represented by the formula (3).

The term "mechanical strength" as used herein may refer to, for example, tensile strength.

As described above, the aromatic polyether according to the present aspect has the intensity ratio X of 0.20 to 2.00%.

The intensity ratio X is a value determined by $^1$H-NMR measurement described in Examples.

In one embodiment, the aromatic polyether according to the present aspect is composed of one kind of aromatic polyether having a single intensity ratio X.

In one embodiment, the aromatic polyether according to the present aspect is a mixture of two or more kinds of aromatic polyethers having intensity ratios X differing from each other. In this case, in $^1$H-NMR measurement of the mixture, the intensity ratio X is 0.20 to 2.00%. Here, the two or more aromatic polyethers may or may not contain an aromatic polyether having the intensity ratio X of 0%.

In one embodiment, the intensity ratio X is 0.20% or more, 0.30% or more, 0.50% or more or 0.70% or more, and 2.00% or less, 1.80% or less, 1.60% or less or 1.00% or less. The intensity ratio X may also be, for example, 0.20 to 1.80%, 0.30 to 1.60%, 0.50 to 1.00% or 0.70 to 1.00%. Thus, the effect of the present disclosure is satisfactorily exhibited. In particular, when the intensity ratio X is 0.20% or more, the melting point of the aromatic polyether can be more lowered. In addition, when the intensity ratio X is 2.00% or less, the melt flow index of the aromatic polyether can be set to an appropriate range for exhibiting better processability.

In the aromatic polyether according to one embodiment, the structural unit represented by the formula (1) is arranged at one or more ends of the main chain. In this instance, the terminal structure bonded to the structural unit represented by the formula (1) may be a halogen atom. The halogen atom can be, for example, chlorine atom (Cl) or fluorine atom (F).

In the aromatic polyether according to one embodiment, a structure in which the structure represented by the formula (3) is bonded to the structural unit represented by the formula (2), is arranged at one or more ends of the main chain. When the structure represented by the formula (3) is not bonded to the structural unit represented by the formula (2) disposed at the end of the main chain, a terminal structure bonded to the structural unit represented by the formula (2) may be, for example, a hydrogen atom (H) (when the terminal structure is hydrogen atom (H), a hydroxyl group is formed together with oxygen atom (O) in the structural unit. represented by the formula (2)).

The terminal structure of the aromatic polyether may be, for example, a structure obtained by substituting the above-described chlorine atom (Cl) or hydroxy group with a hydrogen atom (H) or the like. Note that the terminal structure may be a structure other than those exemplified above.

In one embodiment, the aromatic polyether has a structural unit represented by the following formula (4).

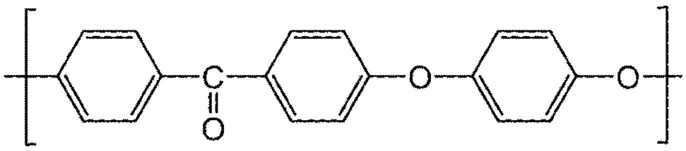

(4)

The structural unit represented by the formula (4) is a connected body of the structural unit represented by the formula (1) and the structural unit represented by the formula (2).

In one embodiment, the aromatic polyether does not have a structure other than the structural units represented by the formula (1) and formula (2) and the structure represented by the formula (3).

In one embodiment, the aromatic polyether has a structure other than the structural units represented by the formula (1) and formula (2) and the structure represented by the formula (3) as long as the effects of the invention is not impaired.

In one embodiment, the proportion (% by mass) of the total of the structural unit represented by the formula (1), the structural unit represented by the formula (2), and the structural unit represented by the formula (3) contained in total monomers subjected to the reaction, based on the total monomers, is 50 % by mass or more, 60 % by mass or more, 70 % by mass or more, 80 % by mass or more, 90 % by mass or more, 95 % by mass or more, 97 % by mass or more, 99 % by mass or more, 99.5 % by mass or more, or 100 % by mass.

In one embodiment, in the aromatic polyether, a molar ratio of the structural unit represented by the formula (1) to the structural unit represented by the formula (2), (structural unit represented by the formula (1): structural unit represented by the formula (2)), is 47.5:52.5 to 52.5:47.5, 48.0:52.0 to 52.0:48.0, 48.5:51.5 to 51.5:48.5, 49.0:51.0 to 51.0:49.0, or 49.5:50.5 to 50.5:49.5.

The number of moles of the structural unit represented by the formula (1) may be larger than, smaller than, or identical to the number of moles of the structural unit represented by the formula (2).

In one embodiment, a melting point $T_m$ of the aromatic polyether has an upper limit of, for example, 341 °C or lower, 340°C or lower, 339°C or lower, 338°C or lower, or 335°C or lower, and a lower limit of, for example, 320°C or higher, 325°C or higher, or 330°C or higher.

In one embodiment, the melting point $T_m$ of the aromatic polyether is 320 to 341 °C, 325 to 340°C, 330 to 338°C, or 330 to 335°C.

The melting point $T_m$ of the aromatic polyether is determined by the methods described in Examples.

In one embodiment, a melt flow index of the aromatic polyether (abbreviated as "MI", which is the same as the melt flow rate (abbreviated "MFR") listed in ASTM D 1238-13) is 1500 g/10 min or lower, 1000 g/10 min or lower, 500 g/10 min or lower, 300 g/10 min or lower, 200 g/10 min or lower, 100 g/10 min or lower, 80 g/10 min or lower, 60 g/10 min or lower, or 50 g/10 min or lower, and 0.0001 g/10 min or higher, 0.0005 g/10 min or higher, 0.001 g/10 min or higher, 0.5 g/10 min or higher, 1.0 g/10 min or higher, or 10 g/10 min or higher.

The melt flow index of the aromatic polyether is, for example, 0.0001 to 1500 g/10 min, preferably 0.0005 to 500 g/10 min, more preferably 0.001 to 100 g/10 min, even more preferably 0.5 to 100 g/10 min, 1.0 to 100 g/10 min, 10 to 80

g/10 min, or 10 to 50g/10 min.

The melt flow index of the aromatic polyether is preferably 100 g/10 min or lower. The aromatic polyether having a melt flow index of 100 g/10 min or lower has a sufficiently high molecular weight, and may be suitably applied to pelletization with, for example, an extruder. In addition, even when the aromatic polyether has such a high molecular weight, it can be formed at a low temperature and has excellent processability because of its lower melting point as a result of satisfying the intensity ratio X described above. Moreover, due to the aromatic polyether having a melt flow index of 1.0 g/10 min or more, the fluidity of the aromatic polyether at the time of melting increases, so that the suitability for injection molding is improved. From these points, it is particularly preferred that the aromatic polyether has a melt flow index of 1.0 to 100 g/10 min.

The melt flow index of the aromatic polyether is measured by the method described in Examples.

The melt flow index of the aromatic polyether can be adjusted by temperature conditions of a reaction mixture (maximum temperature, temperature retention time, temperature increasing rate, and the like) and the ratio of raw materials (monomers and the like) in the reaction mixture.

By using the aromatic polyether according to present aspect, pellets containing the aromatic polyether can be produced, for example. The pellets can be used as material for various forming which require heat resistance, solvent resistance, insulation property, and the like. A formed body may be produced through use of the pellets by a forming method such as injection molding with a mold. In addition, a formed body may be produced through use of the pellets by a forming method such as extrusion molding, press molding, sheet molding, film molding or the like.

The application of the aromatic polyether according to the present aspect is not particularly limited. The aromatic polyether is suitably used as, for example, aerospace applications, sliding members such as a gear and a bearing, various resin compositions, and the like.

A formed body containing the aromatic polyether according to present aspect is suitable as, for example, a formed body for aerospace, a formed body for a sliding member, a filament for a 3D printer or the like. In addition, the formed body containing the aromatic polyether is suitable as, for example, an injection formed body for aerospace or an injection molded body for a sliding member.

The aromatic polyether according to one aspect of the present invention can be produced by a method that is not particularly limited, but can be produced, for example, by a method for producing an aromatic polyether according to one aspect of the present disclosure described below.

## 2. Method for producing aromatic polyether

The method for producing an aromatic polyether according to one aspect of the present disclosure is a method for producing the aromatic polyether according to one aspect of the present disclosure described above, includes: reacting 4,4'-dihalogenobenzophenone, hydroquinone and diphenylsulfone having one reactive group.

4,4'-dihalogenobenzophenone, hydroquinone, and diphenylsulfone having one reactive group are monomers for producing the aromatic polyether by polymerization. In particular, the diphenylsulfone having one reactive group forms a structure represented by the formula (3) at the one or more ends of the main chains of the aromatic polyether.

Through the step of reacting 4,4'-dihalogenobenzophenone, hydroquinone, and diphenylsulfone having one reactive group, an aromatic polyether can be obtained as a copolymer of these compounds (monomeric units).

4,4'-dihalogenobenzophenone, hydroquinone and diphenylsulfone having one reactive group are commercially available.

The 4,4'-dihalogenobenzophenone is not particularly limited and the two halogen atoms may be the same as or different from each other. The two halogen atoms may be independently fluorine atom, chlorine atom, bromine atom, or iodine atom. Specific examples of 4,4'-dihalogenobenzophenone include, for example, 4,4'-difluorobenzophenone, 4,4'-dichlorobenzophenone, and the like.

The 4,4'-dihalogenobenzophenone may be used alone, or in combination of two or more kinds.

The diphenylsulfone having one reactive group is not particularly limited. The diphenylsulfone having one reactive group includes those in which one hydrogen atom on one benzene ring of the two benzene rings in diphenylsulfone is substituted by a reactive group. The reactive group is not particularly limited, but it includes, for example, a halogen atom, a hydroxyl groups, and the like. The halogen atom may include a fluorine atom, a chlorine atom, a bromine atom, and an iodine atom.

Specific examples of the diphenylsulfone having one reactive group include 4-halogenobenzophenone such as 4-fluorodiphenylsulfone and 4-chlorodiphenylsulfone; 4-hydroxydiphenylsulfone; and the like. Among them, 4-chlorodiphenylsulfone is preferable.

The diphenylsulfone having one reactive group may be used alone, or in combination of two or more kinds.

In the following description, the term a "reaction mixture" refers to a reaction system from the beginning of the reaction of 4,4'-dihalogenobenzophenone, hydroquinone, and diphenylsulfone having one reactive group to the completion of the reaction. Preferably, the reaction mixture is in the form of a solution containing, in addition to these monomers, the solvents described below. The composition of the reaction mixture may change as the reaction proceeds. Typically, as

the reaction proceeds, the concentrations of the reactants in the reaction mixture (4,4'-dihalogenobenzophenone, hydroquinone, and diphenylsulfone having one reactive group) decrease and the concentration of the product (aromatic polyether) increases.

The term "the highest temperature" of the reaction mixture means the highest temperature that the reaction mixture reaches during the process from the beginning of the reaction of 4,4'-dihalogenobenzophenone, hydroquinone, and diphenylsulfone having one reactive group to the completion of the reaction (the highest temperature reached).

The highest temperature of the reaction mixture is not particularly limited, and is, for example, 260 to 360°C, preferably higher than 290°C and 360°C or lower, more preferably 295 to 360°C, and still more preferably 295 to 340°C.

In one embodiment, the method for producing an aromatic polyether according to present aspect has holding the reaction mixture at 180 to 220°C for 0.5 to 2 hours, preferably 0.6 to 1.8 hours, more preferably 0.7 to 1.5 hours (hereinafter also referred to as "temperature holding condition (i)"). By having the temperature holding condition (i), the reaction can be accelerated while suppressing the volatilization of the raw materials, so that an aromatic polyether having a higher molecular weight can be obtained.

In one embodiment, the method for producing an aromatic polyether according to present aspect has holding the reaction mixture at 230 to 270°C for 0.5 to 2 hours, preferably 0.6 to 1.8 hours, more preferably 0.7 to 1.5 hours (hereinafter also referred to as "temperature holding condition (ii)"). By having the temperature holding condition (ii), the reaction can be accelerated while suppressing the volatilization of the raw materials, so that an aromatic polyether having a high molecular weight can be obtained.

In one embodiment, the method for producing an aromatic polyether according to the present aspect has holding the reaction mixture at 280 to 360°C for 0.5 to 8 hours, preferably 0.7 hours or more, 1 hour or more, 2 hours or more, 3 hours or more, 4 hours or more, 5 hours or more, and 8 hours or less, 6 hours or less, for example, 0.5 hours or more and 3 hours or less (the upper limit and the lower limit can be arbitrarily combined) (hereinafter, also referred to as "temperature holding condition (iii)"). By having the temperature holding condition (iii), an aromatic polyether having a desired molecular weight can be obtained.

In one embodiment, the method for producing an aromatic polyether according to present aspect may employ two or three temperature holding conditions selected from the group consisting of temperature holding conditions (i) to (iii) above. The two or three temperature holding conditions are preferably applied the conditions from lowest to highest temperature. The method may have a step of increasing temperature of the reaction mixture between applications of the two or three temperature holding conditions.

Temperature increasing rate of the reaction mixture is not particularly limited, and may be, for example, 0.1 to 15°C/min, 0.1 to 10°C/min, 0.1 to 8°C/min, or 0.1 to 5°C/min. By applying the condition, the reaction can be accelerated while suppressing the volatilization of the raw materials, so that an aromatic polyether having a higher molecular weight can be obtained.

In one embodiment, the method for producing an aromatic polyether according to the present aspect, time from when the reaction mixture reaches at 150°C to when it reaches the highest temperature is 2.0 to 10 hours.

In one embodiment, the reaction mixture contains a solvent. The reaction mixture containing the solvent may be in the form of a solution. The solutions may contain 4,4'-dihalogenobenzophenone, hydroquinone and diphenylsulfone having one reactive group dissolved in a solvent.

The solvent is not particularly limited, and for example, a neutral polar solvent may be used. Examples of neutral polar solvents include N,N-dimethylformamide, N,N-diethylformamide, N,N-dimethylacetamide, N,N-diethylacetamide, N,N-dipropylacetamide, N,N-dimethylbenzoic acid amide, N-methyl-2-pyrrolidone, N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-pyrrolidone, N-methyl-2-piperidone, N-ethyl-2-piperidone, N-isopropyl-2-piperidone, N-methyl-6-methyl-2-piperidone, N-methyl-3-ethylpiperidone, dimethyl sulfoxide, diethyl sulfoxide, 1-methyl-1-oxosulfolane, 1-ethyl-1-oxosulfolane, 1-phenyl-1-oxosulfolane, N,N'-dimethylimidazolidinone, diphenylsulfone, and the like. Of these, diphenylsulfone is particularly preferred.

In one embodiment, the reaction mixture contains an aromatic sulfone such as diphenylsulfone and the like, and a content of the solvent having a boiling point of 270 to 330°C is 0 parts by mass or more and less than 1 part by mass with respect to 100 parts by mass of the aromatic sulfone. By taking such content of the solvent, the reaction temperature can be easily controlled.

The reaction mixture may contain one or two or more kinds of solvents. In particular, the reaction mixture preferably contains only one solvent (single solvent) as the solvent. By using a single solvent, a process of the reaction can be simplified.

In one embodiment, the reacting mixture contains a base. the reaction can be accelerated by addition of the base to the reaction mixture.

The base is not particularly limited, and for example, an alkali metal salt and the like are preferable. The alkali metal salt is not particularly limited, and examples thereof include an alkali metal carbonate, an alkali metal bicarbonate, an alkali metal hydride, and an alkali metal hydroxide.

Examples of the alkali metal carbonate include potassium carbonate, sodium carbonate, lithium carbonate, rubidium carbonate, and cesium carbonate.

Examples of the alkali metal bicarbonate include lithium bicarbonate, sodium bicarbonate, potassium bicarbonate, rubidium bicarbonate, cesium bicarbonate, and the like.

Among these, potassium carbonate is particularly preferable.

The base may be used alone, or in combination of two or more kinds..

In one embodiment, the reaction mixture contains potassium carbonate.

In one embodiment, the reaction mixture contains a base other than potassium carbonate. Such a base may be used in combination with potassium carbonate. For example, potassium carbonate and sodium carbonate may be used in combination.

The total concentration of the base in the reaction mixture is not particularly limited.

In one embodiment, the total blending amount of the base in the reaction mixture is 100 parts by mole or more, and is 180 parts by mole or less, 160 parts by mole or less, 140 parts by mole or less, or 120 parts by mole or less, with respect to 100 parts by mole of hydroquinone to be blended in the reaction mixture. When the total blending amount of the base is 100 parts by mole or more, a reaction time can be shortened. When the total blending amount of the base is 180 parts by mole or less, generation of a gel component can be suppressed. In addition, the total blending amount of the base in the reaction mixture is, for example, 100 to 180 parts by mole, preferably 100 to 140 parts by mole, and more preferably 100 to 120 parts by mole, with respect to 100 parts by mole of hydroquinone to be blended in the reaction mixture.

In one embodiment, potassium carbonate is blended as the base in the above-described blending amounts.

A molar ratio of 4,4'-dihalogenobenzophenone (DHBP) and hydroquinone (HQ) to be reacted, ([DHBP]:[HQ]) is not particularly limited.

The molar ratio ([DHBP]:[HQ]) can be appropriately set for the purpose of adjusting the molecular weight of the an aromatic polyether to be obtained.

In one embodiment, the molar ratio ([DHBP]:[HQ]) is 0.970 to 1.006:1, 0.970 to 1.00:1, 0.980 to 0.999:1, or 0.985 to 0.998:1.

The number of moles of 4,4'-dihalogenobenzophenone (DHBP) preferably is identical or smaller than the number of moles of hydroquinone (HQ). By this, it is possible to efficiently introduce the structure represented by the formula (3) to one or more ends of the main chain of an aromatic polyether, so that the obtained aromatic polyether can suitably satisfy the above-described intensity ratio X..

A molar ratio of diphenylsulfone (DPS) having one reactive group and hydroquinone (HQ) to be reacted, ([DPS]:[HQ]) is not particularly limited, for example, 0.002 to 0.080:1.

In one embodiment, a total concentration of4,4'-dihalogenobenzophenone, hydroquinone and diphenylsulfone having one reactive group in the reaction mixture (based on the blending amounts thereof) is not particularly limited, and is, for example, 1.0 mol/L or more, 1.2 mol/L or more, 1.3 mol/L or more, 1.4 mol/L or more or 1.5 mol/L or more, and 6.0 mol/L or less, 5.0 mol/L or less, or 4.0 mol/L or less. In addition, the total concentration of 4,4'-dihalogenobenzophenone, hydroquinone and diphenylsulfone having one reactive group in the reaction mixture (based on the blending amounts thereof) is, for example, 1.0 to 6.0 mol/L, preferably 1.3 to 5.0 mol/L, and more preferably 1.5 to 4.0 mol/L.

In one embodiment, a monomer other than 4,4'-dihalogenobenzophenone, hydroquinone and diphenylsulfone having one reactive group is not used as monomers to be subjected to the above-described reaction.

In one embodiment, a monomer other than 4,4'-dihalogenobenzophenone, hydroquinone and diphenylsulfone having one reactive group are used in combination therewith in the above-described reaction as long as the effects of the present disclosure is not impaired.

In one embodiment, a total proportion (% by mass) of 4,4'-dihalogenobenzophenone, hydroquinone and diphenylsulfone having one reactive group based on the total amount of monomers to be subjected to the reaction is 50% by mass or more, 60% by mass or more, 70% by mass or more, 80% by mass or more, 90% by mass or more, 95% by mass or more, 97% by mass or more, 99% by mass or more, 99.5% by mass or more, or 100% by mass.

In one embodiment, 70 % by mass or more, 80 % by mass or more, 90 % by mass or more, 95 % by mass or more, 99 % by mass or more, 99.5 % by mass or more, 99.9 % by mass or more, or substantially 100 % by mass of the reaction mixture at the beginning of the reaction is occupied by:

4,4'-dihalogenobenzophenone, hydroquinone, diphenylsulfone having one reactive group, an alkali metal salt and a solvent, or
4,4'-dihalogenobenzophenone, hydroquinone, diphenylsulfone having one reactive group, one or more alkali metal salts selected from the group consisting of potassium carbonate and sodium carbonate, and diphenylsulfone, or
4,4'-dihalogenobenzophenone, hydroquinone, diphenylsulfone with one reactive group, potassium carbonate, and diphenylsulfone.

In the case of "substantially 100 % by mass", the reaction mixture may contain inevitable impurities.

The reaction of 4,4'-dihalogenobenzophenone, hydroquinone and diphenylsulfone having one reactive group can be carried out under an inert gas atmosphere. The inert gas is not particularly limited, and examples thereof include nitrogen and argon gas.

3. Composition

The composition according to one aspect of the present disclosure (hereinafter, also referred to as the "composition according to the first aspect") contains the aromatic polyether according to one aspect of the present disclosure above and an inorganic compound.
The composition according to present aspect exhibits excellent mechanical strength.
In one embodiment, the inorganic compound is one or more selected from the group consisting of glass fibers, carbon fibers, and boron nitride. By addition of the inorganic compound, the strength of the composition is further improved.
In one embodiment, the inorganic compound is one or more selected from the group consisting of glass fibers and carbon fibers, in the form of one or more selected from the group consisting of a chopped strand, a roving, a woven fabric, a nonwoven fabric and a unidirectional material (also referred to as "UD material"). By the use of such inorganic compound, the strength of the composition is further increased.
In one embodiment, the inorganic compound is glass fibers.
In one embodiment, the composition can be a fiber composite material containing the aromatic polyether as a matrix and the fibrous inorganic compound such as glass fibers, carbon fibers, and the like. The fiber composite material may be a so-called fiber-reinforced thermoplastic (FRTP).
The fibrous inorganic compound may be one treated with a sizing agent. The sizing agent can unite the fibrous inorganic compound into a bundle shape. The fibrous inorganic compound treated with the sizing agent has the sizing agent adhering to its surface. The sizing agent is not particularly limited, and examples thereof include an epoxy-based sizing agent, a urethane-based sizing agent, and a polyamide-based sizing agent. As the sizing agent, the aromatic polyether according to one aspect of the present disclosure can also be used. The sizing agent may be used alone, or in combination of two or more kinds. As the fibrous inorganic compound, one not treated with any sizing agent may be used.
In one embodiment, the inorganic compound is one having an effect of reinforcing the aromatic polyether.
The content of the inorganic compound in the composition is not particularly limited.
In one embodiment, the content of the inorganic compound in the composition is, for example, 5 parts by mass or more, 10 parts by mass or more or 20 parts by mass or more, and is 60 parts by mass or less, 55 parts by mass or less, or 50 parts by mass or less, with respect to 100 parts by mass of the aromatic polyether. The upper limit and the lower limit can be arbitrarily combined.
The composition may contain any components other than the aromatic polyether and the inorganic compound. The other components are not particularly limited, and examples thereof include other resins that are not an aromatic polyether. Examples of the other resin include a fluororesin such as polytetrafluoroethylene and the like. The other components may be used alone, or in combination of two or more kinds.
In one embodiment, 50 % by mass or more, 60 % by mass or more, 70 % by mass or more, 80 % by mass or more, 90 % by mass or more, 95 % by mass or more, 97 % by mass or more, 99 % by mass or more, 99.5 % by mass or more, or substantially 100 % by mass of the composition is occupied by:

the aromatic polyether,
the aromatic polyether and the inorganic compound,
the aromatic polyether and other components described above or
the aromatic polyether, the inorganic compound and the other components described above.

In the case of "substantially 100% by mass", the composition may contain inevitable impurities.
A method of preparing the composition is not particularly limited, and examples thereof include mixing with a known mixer, melting and kneading with an extruder, and the like. By using a twin-screw kneader, the inorganic compound may be side-fed into an aromatic polyether.
Pellets of the composition may be produced. The pellets may be used as a raw material for producing a formed body.
In one embodiment, a method for producing pellets has steps of cutting down fibrous inorganic compound into short fibers, and then adding the aromatic polyether to the short fibers.
The pellets (also referred to as "short fiber pellets") can be produced by mixing the short fibers with the aromatic polyether, and then, subjecting them to granulation.
In one embodiment, a method for producing pellets has steps of immersing a roving of a fibrous inorganic compound in a melted aromatic polyether, followed by pultrusion, and then cutting down the pultruded fibers into desired

pellet lengths, to obtain pellets (also referred to as "long-fiber pellets"). When the long-fiber pellets is produced as described above, the breakage of the fibrous inorganic compound can be suppressed.

A molded body can be produced by molding the composition (that may be in the form of pellets described above). A known method, such as injection molding, extrusion molding, or blow molding, may be used for the molding. In addition, the composition may be subjected to press molding by using a known method, such as a cold pressing method or a hot pressing method. Further, the composition can be used as a resin composition for 3D printing, and it can be molded by using a 3D printer.

A composition according to another aspect of the present disclosure (hereinafter, also referred to as a "composition according to the second aspect") contains an aromatic polyether comprising a structural unit represented by the following formula (1), a structural unit represented by the following formula (2), and a structure represented by the following formula (3),

wherein $^1$H-NMR measurement of the composition, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm (hereinafter, simply referred to as "intensity ratio Y") is 0.20 to 2.00%.

The composition according to the present aspect has a decreased melting point and an effect of exhibiting excellent processability.

In addition, the composition according to the present aspect can exhibit excellent mechanical strength by blending an inorganic compound.

As to the aromatic polyether contained in the composition, the description of the aromatic polyether according to one aspect of the present disclosure is applied by incorporation.

As described above, the composition according to the present aspect has the intensity ratio Y of 0.20 to 2.00%.

The intensity ratio Y is the same as the intensity ratio X, except that the measurement target is the composition instead of the aromatic polyether, and can be obtained by using the composition as a measurement target instead of the aromatic polyether in$^1$H-NMR measurement described in Examples. For the intensity ratio Y, the description of the intensity ratio X is applied by incorporation.

In one embodiment, the intensity ratio Y is 0.20% or more, 0.30% or more, 0.50% or more or 0.70% or more, also 2.00% or less, 1.80% or less, 1.60% or less, or 1.00% or less. The intensity ratio Y may also be, for example, 0.20 to 1.80%, 0.30 to 1.60%, 0.50 to 1.00%, or 0.70 to 1.00%. By the intensity ratio Y satisfying the above range, the effect of the present disclosure is satisfactorily exhibited. In particular, when the intensity ratio Y is 0.20% or more, the melting point of the aromatic polyether in the composition can be more lowered. In addition, when the intensity ratio Y is 2.00% or less, the melt flow index of the aromatic polyether in the composition can be set to an appropriate range for exhibiting better processability.

In one embodiment, the composition contains an inorganic compound. As to the inorganic compound that the composition can contain, the description of that contained in the composition according to the first aspect described above is applied by incorporation.

The description of the composition according to the first aspect is applied to the composition of the present aspect by incorporation, except that the composition satisfies the intensity ratio Y instead of the aromatic polyether satisfies the intensity ratio X.

4. Sheet

A sheet according to one aspect of the present disclosure (hereinafter, also referred to as a "sheet according to the first aspect") contains a cloth containing an inorganic compound, and the aromatic polyether according to one aspect of the present disclosure being impregnated in the cloth.

The sheet according to the present aspect can exhibit excellent mechanical strength in the same manner as when the aromatic polyether contains an inorganic compound.

The cloth is not particularly limited, and it is sufficient containing fibers of an inorganic compound. In one embodiment, the cloth is composed of fibers arranged in a planar manner. The cloth may be, for example, a woven fabric, a nonwoven fabric, or a unidirectional material.

The unidirectional material is composed of fibers aligned in one direction.

The fibers that is contained in the cloth are not particularly limited.

The cloth preferably contains one or more selected from the group consisting of a glass fiber and a carbon fiber. In one embodiment, the cloth contains a glass fiber.

In one embodiment, the sheet may be a fiber composite material containing the aromatic polyether as a matrix and the fibrous inorganic compound such as glass fibers, carbon fibers, or the like. Such a fiber composite material may be a so-called fiber-reinforced thermoplastic (FRTP). For example, a unidirectional fiber reinforced plastic is obtained by using a unidirectional material as the cloth.

In the sheet according to one embodiment, the aromatic polyether is impregnated between the fibers contained in the cloth. The cloth may be a single cloth or a stacked body composed of two or more cloths. When the cloth is a stacked body, the aromatic polyether can also contribute to bonding between the cloths.
The sheet may include other components in addition to the aromatic polyether and the cloth. As the other components, the other components described for the composition may be used.
In one embodiment, 50% by mass or more, 60% by mass or more, 70% by mass or more, 80% by mass or more, 90% by mass or more, 95% by mass or more, 97% by mass or more, 99% by mass or more, 99.5% by mass or more, or substantially 100% by mass of the sheet occupied by:

the aromatic polyether and the cloth or
the aromatic polyether, the cloth and other components described above.
In the case of "substantially 100% by mass", inevitable impurities may be contained in the sheet.

A method of producing the above-described sheet is not particularly limited.
In one embodiment, the method for producing a sheet has a step of impregnating the aromatic polyether into a cloth. In this case, for example, a solution obtained by dissolving the aromatic polyether in an appropriate solvent, a mixture obtained by mixing the aromatic polyether in an appropriate vehicle, or the melted aromatic polyether can be applied to carbon fibers to impregnate the aromatic polyether to the carbon fibers.
In one embodiment, a method for producing a sheet has a step of producing a cloth from fibers bundled by using a sizing agent containing the aromatic polyether.
In one embodiment, a method for producing a sheet has steps of stacking a film containing the aromatic polyether to a cloth and subjecting it to melt-press..
In one embodiment, a method for producing a sheet has steps of directly adding a powder of the aromatic polyether to a cloth and then melting the powder.
As described above, in the description relating to the method for producing a sheet, a cloth impregnated with the aromatic polyether may be a stacked body described above.
In one embodiment, the sheet is a planar shape over entire surface.
In one embodiment, the sheet is formed in a three-dimensionally shape. The shape of the sheet being "three-dimensional" means that the sheet has a curved portion (including a bent portion). A method for producing a sheet with a three-dimensional shape is not particularly limited.
In one embodiment, the method for producing a sheet with a three-dimensional shape has a step of immersing a cloth having a three-dimensional shape in the aromatic polyether.
In one embodiment, the method for producing a sheet with a three-dimensional shape has steps of immersing a cloth in the aromatic polyether to obtain a sheet (for example, a planar sheet), and then forming the sheet to have a three-dimensional shape. The forming can be performed, for example, by applying pressure to the sheet with heat.
In the above description of the sheet, the aromatic polyether may be impregnated into the cloth as the composition according to one aspect of the present disclosure above. In this case, the composition may or may not contain the inorganic compound.
A sheet according to another aspect of the present disclosure (hereinafter also referred to as the sheet according to the second aspect) is a sheet containing a cloth containing an inorganic compound, and a composition impregnated in the cloth, wherein the composition contains an aromatic polyether including a structural unit represented by the following formula (1), a structural unit represented by the following formula (2), and a structure represented by the following formula (3), and wherein $^1$H-NMR measurement of the composition, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm is 0.20 to 2.00%.
The sheet according to the present aspect can exhibit excellent mechanical strength in the same as that when an inorganic compound is added to the aromatic polyether.
For the composition contained in the sheet, the description of the composition according to the second aspect of the present disclosure is incorporated.
With respect to the cloth contained in the sheet, the description of the sheet according to the first aspect of the present disclosure is applied by incorporation.
With respect to the sheet of this aspect, the description for the sheet according to the first aspect is applied by incorporation, except that the composition satisfies the intensity ratio Y instead of the aromatic polyether satisfying the intensity ratio X.

Examples

Examples of the present disclosure are described below, but the present disclosure is not limited by these Examples.

(Example 1)

In a 300 mL four-neck flask equipped with a stirrer, a thermometer, a nitrogen inlet tube, and a water recovery container connected to a cooling tube, 34.9333 g (0.160 mol) of 4,4'-difluorobenzophenone, 17.6938 g (0.161 mol) of hydroquinone, 0.8112 g (0.00321 mol) of 4-chlorodiphenylsulfone, 25.4395 g (0.184 mol) of potassium carbonate, and 139.04 g of diphenylsulfone were placed, and nitrogen gas was flowed in the container.

The reaction mixture was subjected to a reaction under the following temperature control.

<Temperature Control>

(1) The temperature of the reaction mixture was increased up to 150°C, and then the temperature was increased up to 200°C over 30 minutes,
(2) the reaction mixture was held at 200°C for 1 hour,
(3) the temperature was increased from 200°C to 250°C (temperature increasing rate:1.7°C/min),
(4) the reaction mixture was held at 250 °C for 1 hour,
(5) the temperature was increased from 250°C to 340°C (the highest temperature of the reaction mixture) (temperature increasing rate: 3.0°C/min), and
(6) the reaction mixture was held at 340°C (the highest temperature of the reaction mixture) for 1 hour.

After completion of the reaction, the product was ground with a blender (7010HS manufactured by Waring), washed with acetone and water in this order, and then dried in a dryer at 180°C to obtain an aromatic polyether (PEEK) in powder form.

The obtained aromatic polyether wes subjected to the following measurements (1) to (5).

(1) Melt Flow Index (MI)

The melt flow index of aromatic polyether was measured in accordance with JIS K 7210-1:2014(ISO 1133-1:2011) using a melt indexer L-220 (manufactured by Tateyama Kagaku High-Technologies Co., Ltd.) under the following measurement conditions.

[Measurement Conditions]

· Measurement temperature (resin temperature): 380°C
· Measurement load: 2.16 kg
· Cylinder inner diameter: 9.550 mm
· Die inner diameter: 2.095 mm
· Die length :8.000 mm
· Piston head length: 6.35 mm
· Piston head diameter: 9.474 mm
· Piston weight: 110.0 g (the measurement load includes the piston weight)
· Operation:
The sample was dried at 150°C for 2 hours or more in advance. The sample was placed in the cylinder, and the piston was inserted thereinto, followed by preheating for 6 minutes. The load was applied, a piston guide was removed, and a melted sample was extruded from the die. The sample is cut out when the piston moves within a predetermined range and for a predetermined time (t [s]), and the weight thereof is measured (m [g]). The MI is obtained from the following equation.

$$MI\ [g/10\ min] = 600/t \times m$$

(2) $^1$H-NMR measurement (intensity ratio X)

The aromatic polyether was subjected to $^1$H-NMR measurement, and a ratio of a peak intensity of the peak intensity ($I_3$) of a peak having the largest peak intensity among peaks derived from the structure represented by the formula (3) appearing in the range of chemical shift 7.55 ppm to 7.65 ppm, relative to a peak intensity ($I_2$) of a peak derived from the structure represented by the formula (2) appearing in the vicinity of chemical shift 7.35 ppm (intensity ratio X) was obtained from the following equation.

$$\text{Intensity ratio X [\%]} = (I_3/I_2) \times 100.$$

The "peak derived from the structure represented by the formula (2) appearing in the vicinity of chemical shift 7.35 ppm" is specifically derived from the four hydrogen atom on the benzene ring in the structure represented by the formula (2). The peak may appear in the vicinity of chemical shift 7.35 ppm, for example, in the range of chemical shift 7.32 to 7.40 ppm.

In addition, the "peak having the largest peak intensity among peaks derived from the structure represented by the formula (3) appearing in the range of chemical shift 7.55 ppm to 7.65 ppm" is specifically derived from two hydrogen atoms bonded to the dotted carbon atom in the following formula (3').

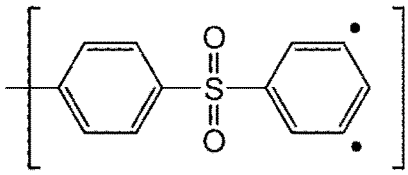

(3')

Measurement conditions for $^1$H-NMR measurement described above are as follows.

<Measurement Conditions for $^1$H-NMR Measurement>

- · NMR device: "Ascend500" manufactured by Bruker Japan
- · Probe: TCI cryoprobe having a diameter of 5 mm
- · NMR sample tube diameter: Diameter 5 mm
- · Preparation of sample solution: To about 20 mg of the sample, 0.6 mL of methanesulfonic acid was added, the mixture was stirred at room temperature for 1 hour, then 0.4 mL of deuterated dichloromethane was added, and the mixture was further stirred at room temperature for 30 minutes to dissolve the sample., to obtain a sample solution.
- · Observation range: 20 ppm
- · Observation center: 6.175 ppm
- · Number of data points: 64 kB
- · Pulse repetition time: 10 seconds
- · Cumulative number: 256 times
- · Flip angle: 30°
- · Measurement temperature: 25°C
- · Chemical shift reference: To set the position of a central peak out of the 3 peaks of deuterated dichloromethane to 5.32 ppm

The fact that the structure represented by the formula (3) is contained in the aromatic polyether can be confirmed by analysis in combination of $^1$H-NMR measurement, two-dimensional NMR measurement, mass-spectrometry, and the like.

(3) Melting point $T_m$

5 mg of the aromatic polyether (sample) was weighed on an aluminum pan and performed thermal scanning measurement using a differential scanning calorimeter ("DSC 8500" manufactured by Perkin Elmer).

Temperature scanning was carried out under nitrogen flow at 20 mL/min in the following order with nitrogen flowing at 20 ml/min: temperature of the sample was raising increased at a rate of 20°C/min from 50°C to 420°C (first time temperature increasing), holding held at 420°C for 1 minute, decreased at a rate of 20°C/min from 420°C to 50°C (first time

temperature decreasing), held at 50°C for 1 minute, and increasing at a rate of 20°C/min from 50°C to 420°C (second time temperature increasing).

The melting point $T_m$ was determined as the temperature of the peak top by reading the endothermic peak due to melting observed at the second time temperature increasing.

The foregoing results are shown in Table 1.

(Example 2)

An aromatic polyether (PEEK) was obtained in the same manner as in Example 1, except that the composition of the reaction mixture of Example 1 was changed to 34.9359 g (0.160 mol) of 4,4'-difluorobenzophenone, 17.8118 g (0.162 mol) of hydroquinone, 0.8128 g (0.00322 mol) of 4-chlorodiphenylsulfone, 25.7026 g (0.186 mol) of potassium carbonate, and 140.00 g of diphenylsulfone. The obtained aromatic polyether was subjected to the same measurements as in Example 1. The results are shown in Table 1.

(Example 3)

An aromatic polyether (PEEK) was obtained in the same manner as in Example 1, except that the composition of the reaction mixture of Example 1 was changed to 35.6442 g (0.163 mol) of 4,4'-difluorobenzophenone, 17.8042 g (0.162 mol) of hydroquinone, 0.2877 g (0.001 mol) of 4-chlorodiphenylsulfone, 25.6959 g (0.186 mol) of potassium carbonate, and 139.98 g of diphenylsulfone. The obtained aromatic polyether was subjected to the same measurements as in Example 1. The results are shown in Table 1.

(Comparative Example 1)

A commercially available PEEK ("90G" manufactured by Victrex) was used as the aromatic polyether of Comparative Example 1. This aromatic polyether was subjected to the same measurements as in Example 1. The results are shown in Table 1.

(Comparative Example 2)

A commercially available PEEK ("151G" manufactured by Victrex) was used as the aromatic polyether of Comparative Example 2. This aromatic polyether was subjected to the same measurements as in Example 1. The results are shown in Table 1.

(Comparative Example 3)

In a 300 mL four-port flask equipped with a stirrer, a thermometer, a nitrogen inlet tube, and a water received container connected to a cooler tube, 35.6129 g (0.163 mol) of 4,4'-difluorobenzophenone, 17.6167 g (0.160 mol) of hydroquinone, 26.7477 g (0.194 mol) of potassium carbonate, and 160.00 g of diphenylsulfone were placed, and nitrogen gas was introduced into the container.

The reaction mixture was subjected to a reaction under the following temperature control.

<Temperature Control>

(1) Temperature of the reaction mixture was increased up to 170°C, and then held at the same temperature for 2 hours,
(2) the temperature was increased from 170°C to 210°C (temperature increasing rate: 1.3°C/min),
(3) the temperature was held at 210°C for 1 hour,
(4) the temperature was increased from 210°C to 250°C (temperature increasing rate: 1.3°C/min),
(5) the temperature was held at 250°C for 2 hours,
(6) the temperature was increased from 250°C to 310°C (the highest temperature of the reaction mixture) (temperature increasing rate: 2.0°C/min),
(7) the reaction mixture was held at 310°C (the highest temperature of the reaction mixture) for 1 hour,
(8) 0.3597 g (0.0015 mol) of 4-fluorodiphenylsulfone was added to the reactive mixture, and
(9) the reaction mixture was held at 310°C (the highest temperature of the reaction mixture) for 1 hour.

After completion of the reaction, the product was ground with a blender (7010HS manufactured by Waring),

washed with acetone and water in this order, and then dried in a dryer at 180°C to obtain an aromatic polyether (PEEK) in powder form.

The aromatic polyether was subjected to the same measurements as in Example 1. The results are shown in Table 1.

Table 1

| | Example 1 | Example 2 | Example 3 | Comparative Example 1 | Comparative Example 2 | Comparative Example 3 |
|---|---|---|---|---|---|---|
| MI [g/10 min] | 55.9 | 7.3 | 21.1 | 52.2 | 36.3 | 95.0 |
| Intensity ratio X [%] | 0.55 | 0.73 | 0.25 | 0.00 | 0.00 | 0.16 |
| Melting Point $T_m$ [°C] | 337.6 | 331.9 | 339.2 | 343.7 | 342.7 | 343.5 |

It can be seen from Tables 1 that aromatic polyethers of Examples 1 and 2 have lowered melting point $T_m$ compared to the aromatic polyethers of Comparative Examples 1 and 2.

(Example 4)

In a 2L four-port flask equipped with a stirrer, a thermometer, a nitrogen inlet tube, and a water received container connected to a cooler tube, 243.32 g (1.12 mol) of 4,4'-difluorobenzophenone, 5.66 g (0.02 mol) of 4-chlorophenylphenylsulfone, 123.40 g (1.12 mol) of hydroquinone, 178.11 g (1.29 mol) of potassium carbonate, and 970.3 g of diphenylsulfone were placed, and nitrogen gas was introduced into the container.

The reaction mixture was subjected to a reaction under the following temperature control.

<Temperature Control>

(1) The temperature of the reaction mixture was increased up to 150°C, and then increased to 200°C for over 30 minutes,
(2) the reaction mixture was held at 200°C for 1 hour,
(3) the temperature was increased from 200°C to 250°C (temperature increasing rate: 1.7°C/min),
(4) the reaction mixture was held at 250°C for 1 hour,
(5) the temperature was increased from 250°C to 300°C (temperature increasing rate: 3.0°C /min) (the highest temperature of the reaction mixture), and
(6) the reaction mixture was held at 300°C (the highest temperature of the reaction mixture) for 5 hours.

After completion of the reaction, the product was ground with a blender (7010HS manufactured by Waring), washed with acetone and water in this order, and then dried in a dryer at 180°C to obtain an aromatic polyether (PEEK) in powder form.

The aromatic polyether was measured for MI and the intensity ratio X in the same manner as in Example 1. The results are as follows.

· MI: 47.6 g/10cm
· Intensity ratio X: 0.70%

(Example 5)

The aromatic polyether (PEEK) obtained in Example 4 and an inorganic compound (glass fibers; ECS03 T-786H chopped strand having an average fiber diameter of 10 μm, and an average fiber length of 3 mm; manufactured by Nippon Electric Glass Co., Ltd.) were mixed in a mass ratio (aromatic polyether: inorganic compound) of 70:30, and the mixture was kneaded at 400°C using a twin-screw kneader (Process11 manufactured by Thermo Fisher) to obtain a composition.

(Example 6)

The aromatic polyether (PEEK) obtained in Example 4 and an inorganic compound (carbon fibers; TR06U B4E chopped fiber, manufactured by Mitsubishi Chemical Corporation having an average fiber diameter of 7 μm, and an

average fiber length of 6 mm) were mixed in a mass ratio (aromatic polyether: inorganic compound) of 70:30, and the mixture was kneaded at 400°C using a twin-screw kneader (Thermo Fisher Co., Ltd., Process11) to obtain a composition.

<Evaluation method>

Each of the aromatic polyether obtained in Example 4 and the compositions obtained in Examples 5 and 6 was injection-molded at 400°C using a small molding machine (MiniJet-Pro, manufactured by Haake) to prepare a test piece having a dumbbell-shaped 5A defined in ISO 527-2:2012.

The tensile strength of the resultant test piece was measured at a test speed of 5 mm/min and a chuck-to-chuck distance of 50 mm. The results are as follows.

· Example 4: 92.9 MPa
· Example 5: 168.0 MPa
· Example 6: 209.1 MPa

<Evaluation>

The aromatic polyether of Example 4 exhibited better mechanical strength (tensile strength) by blending the inorganic compound (Examples 5 and 6). In addition, all of the aromatic polyether obtained in Example 4, and the compositions obtained in Examples 5 and 6 have good, processability (in particular, formability in a melted state).

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification and the specification of Japanese application(s) based on which the present application claims Paris convention priority are incorporated herein by reference in its entirety.

## Claims

1. An aromatic polyether comprising a structural unit represented by the following formula (1), a structural unit represented by the following formula (2), and a structure represented by the following formula (3), wherein in $^1$H-NMR measurement, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm is 0.20 to 2.00%.

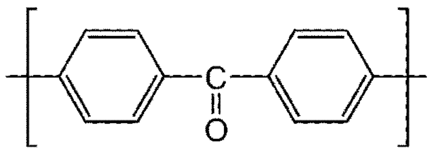

(1)

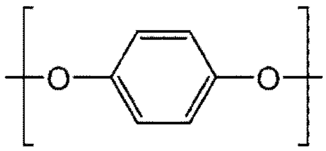

(2)

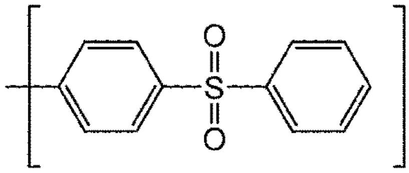

(3)

2. The aromatic polyether according to claim 1, comprising a structural unit represented by the following formula (4).

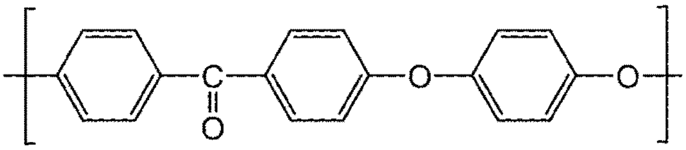

(4)

3. The aromatic polyether according to claim 1 or 2, wherein the ratio of the peak intensities is 0.20 to 1.80%.

4. The aromatic polyether according to any one of claims 1 to 3, having a melt flow index of 1.0 to 100 g/10 min.

5. A method for producing an aromatic polyether comprising:

reacting 4,4'-dihalogenobenzophenone, hydroquinone, and diphenylsulfone having one reactive group, wherein the aromatic polyether comprises a structural unit represented by the following formula (1), a structural unit represented by the following formula (2), and a structure represented by the following formula (3), and has in $^1$H-NMR measurement, a ratio of the peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm of 0.20 to 2.00%.

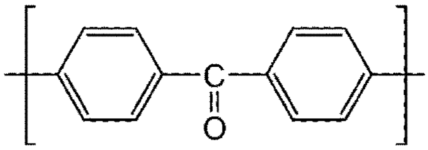

(1)

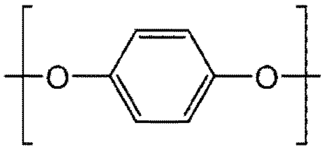

(2)

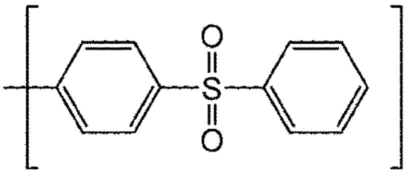

(3)

6. The method for producing an aromatic polyether according to claim 5, wherein a molar ratio of 4,4'-dihalogenobenzophenone (DHBP) to hydroquinone (HQ) used in the reaction, ([DHBP]:[HQ]), is 0.97 to 1.06:1.

7. The method for producing an aromatic polyether according to claim 5 or 6, wherein a molar ratio of 4,4'-dihalogenobenzophenone (DHBP) to hydroquinone (HQ) used in the reaction, ([DHBP]:[HQ]), is 0.97 to 1.00:1.

8. The method for producing an aromatic polyether according to any one of claims 5 to 7, wherein a molar ratio of diphenylsulfone (DPS) having one reactive group to hydroquinone (HQ) used in the reaction, ([DPS]:[HQ]), is 0.002 to 0.080:1.

9. The method for producing an aromatic polyether according to any one of claims 5 to 8, wherein 4,4'-dihalogenobenzophenone comprises 4,4'-dichlorobenzophenone.

10. The method for producing an aromatic polyether according to any one of claims 5 to 9, wherein 4,4'-dihalogenobenzophenone comprises 4,4'-difluorobenzophenone.

**11.** The method for producing an aromatic polyether according to any one of claims 5 to 10, wherein diphenylsulfone having one reactive group comprises 4-chlorodiphenylsulfone.

**12.** The method for producing an aromatic polyether according to any one of claims 5 to 11, wherein diphenylsulfone having one reactive group comprises 4-fluorodiphenylsulfone.

**13.** The method for producing an aromatic polyether according to any one of claims 5 to 12, wherein the aromatic polyether has a melt flow index of 1.0 to 100 g/10 min.

**14.** A composition comprising:

the aromatic polyether according to any one of claims 1 to 4, and
an inorganic compound.

**15.** A composition comprising an aromatic polyether comprising a structural unit represented by the following formula (1), a structural unit represented by the following formula (2), and a structure represented by the following formula (3), wherein $^1$H-NMR measurement of the composition, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm is 0.20 to 2.00%.

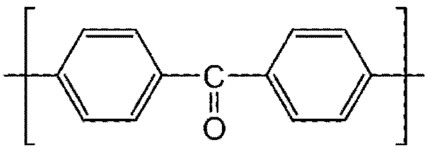

(1)

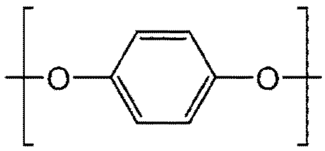

(2)

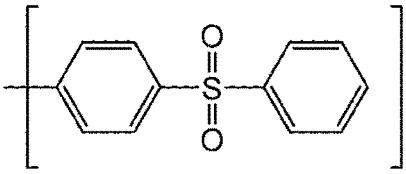

(3)

**16.** The composition according to claim 15, wherein the aromatic polyether comprises a structural unit represented by the following formula (4).

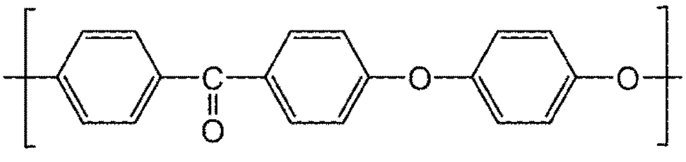

(4)

**17.** The composition according to claim 15 or 16, wherein the ratio of the peak intensities is 0.20 to 1.80%.

**18.** The composition according to any one of claims 15 to 17, wherein the aromatic polyether has a melt flow index of 1.0 to 100 g/10 min.

**19.** The composition according to any one of claims 15 to 18, comprising an inorganic compound.

**20.** The composition according to claim 14 or 19, wherein the inorganic compound is one or more selected from the group consisting of glass fibers, carbon fibers, and boron nitride.

**21.** The composition according to any one of claims 14, 19 and 20, wherein the inorganic compound is one or more selected from the group consisting of glass fibers and carbon fibers, in the form of one or more selected from the group consisting of chopped strand, roving, woven fabric, nonwoven fabric and unidirectional material.

**22.** The composition according to any one of claims 14, 19, 20 and 21, wherein the inorganic compound is glass fibers.

**23.** A sheet comprising a cloth comprising an inorganic compound, and the aromatic polyether according to any one of claims 1 to 4 being impregnated in the cloth.

**24.** A sheet comprising a cloth comprising an inorganic compound, and an composition being impregnated in the cloth,

wherein the composition comprises an aromatic polyether comprising a structural unit represented by the following formula (1), a structural unit represented by the following formula (2), and a structure represented by the following formula (3), and
wherein $^1$H-NMR measurement of the composition, a ratio of a peak intensity of a peak having the largest peak intensity among peaks derived from the structure represented by the formula (3) appearing in the range of chemical shift 7.55 ppm to 7.65 ppm, relative to a peak intensity of a peak derived from the structural unit represented by the formula (2) appearing in the vicinity of chemical shift 7.35 ppm is 0.20 to 2.00%.

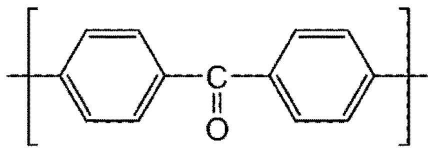
(1)

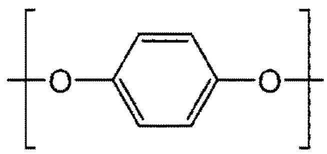
(2)

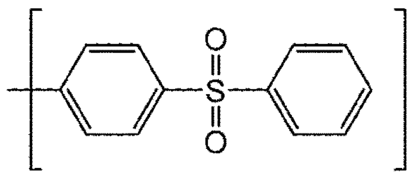
(3)

**25.** The sheet according to claim 24, wherein the aromatic polyether comprises a structural unit represented by the following formula (4).

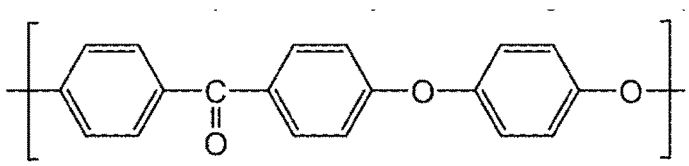
(4)

**26.** The sheet according to claim 24 or 25, wherein the ratio of the peak intensities is 0.20 to 1.80%.

**27.** The sheet according to any one of claims 24 to 26, wherein the aromatic polyether has a melt flow index of 1.0 to 100 g/10 min.

**28.** The sheet according to any one of claims 23 to 27, wherein the cloth is a unidirectional material.

**29.** The sheet according to any one of claims 23 to 28, wherein the cloth comprises one or more selected from the group consisting of glass fibers and carbon fibers.

## INTERNATIONAL SEARCH REPORT

International application No.
**PCT/JP2023/006679**

### A. CLASSIFICATION OF SUBJECT MATTER

***C08G 65/34***(2006.01)i; ***C08J 5/04***(2006.01)i; ***C08K 3/00***(2018.01)i; ***C08L 71/12***(2006.01)i
FI: C08G65/34; C08K3/00; C08L71/12; C08J5/04 CEZ

According to International Patent Classification (IPC) or to both national classification and IPC

### B. FIELDS SEARCHED

Minimum documentation searched (classification system followed by classification symbols)

C08G65/34; C08J5/04; C08K3/00; C08L71/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>Y | CN 113736044 A (JILIN UNIVERSITY) 03 December 2021 (2021-12-03)<br>claims 1-10, paragraph [0003], examples 1-3, application examples 1-3 | 1-13, 15-18<br>14, 19-29 |
| X<br>Y | CN 113652057 A (JILIN UNIVERSITY) 16 November 2021 (2021-11-16)<br>claims 1-10, paragraphs [0038], [0039], [0046], [0081]-[0085], examples 1-7 | 1-13, 15-18<br>14, 19-29 |
| Y<br>A | WO 2021/117814 A1 (IDEMITSU KOSAN CO) 17 June 2021 (2021-06-17)<br>claims, paragraphs [0058], [0069] | 14, 19-29<br>1-13, 15-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2023/006679**

| Patent document cited in search report | Publication date (day/month/year) | Patent family member(s) | Publication date (day/month/year) |
|---|---|---|---|
| CN 113736044 A | 03 December 2021 | (Family: none) | |
| CN 113652057 A | 16 November 2021 | (Family: none) | |
| WO 2021/117814 A1 | 17 June 2021 | EP 4074748 A1<br>claims, paragraphs [0109], [0132]<br>CN 114746476 A<br>TW 202132405 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 113736044